# EUROPEAN PATENT APPLICATION

(11) **EP 3 364 236 A1**
(43) Date of publication of application: **22.08.2018**
(21) Application number: 16846736.3
(22) Date of filing: 22.06.2016
(51) Int. Cl.: G02C 7/10, G02C 7/02, G02B 1/04, C08G 18/38, C08K 5/00, B29D 11/00

(54) **FUNCTIONAL EYEGLASS LENS FOR BLOCKING ULTRAVIOLET AND BLUE LIGHT**

(30) Priority: 15.09.2015 KR 20150130574
(71) Applicant: Chemiglas Corporation, Yangsan-si, Gyeongsangnam-do 50592 (KR)
(72) Inventor: PARK, Jonggil, Busan 49497 (KR)
(74) Representative: Korakis-Ménager, Sophie
(86) International application number: PCT/KR2016/006618
(87) International publication number: WO 2017/047914

(57) **Abstract**

The present invention provides a functional eyeglass lens for blocking ultraviolet and blue light, which comprises a mixture of the following materials: a polymerization initiator which reacts with a monomer, which is a raw material of a plastic lens whose refractive index varies depending on physical properties, and which converts the monomer into a polymer; an ultraviolet absorber for absorbing ultraviolet from a plastic lens which is mixed with the monomer to then be converted into a polymer; and a transparent material for making the plastic lens, which has been mixed with the monomer and converted into a polymer, transparent by minimizing a phenomenon in which the plastic lens appears yellow, wherein the ultraviolet absorber comprises a mixture of any one or more of UV-A, UV-B and UV-C which are benzotriazole-based ultraviolet absorbers having different molecular weights, and the transparent material is a mixture of a blue dye, showing blue color, and a red dye, showing red color, which is mixed with the monomer at a predetermined ratio.

## Description

### Technological field

The present invention relates to a functional eyeglass lens for blocking ultraviolet and blue light, and more specifically to a functional eyeglass lens for blocking ultraviolet and blue light that blocks both the ultraviolet light in the short-wavelength region and the short-wavelength blue light that are extremely harmful to the human body and eyes, thus providing the effect of preventing photophobia, eye fatigue, and eye disease caused by ultraviolet radiation and blue light.

### Prior art

Generally speaking, long-wavelength electromagnetic waves such as the green and red components of visible light, infrared light, microwaves, and radio waves do not have a major harmful effect on the human body or the eyes in particular, but short-wavelength electromagnetic waves such as the purple and blue components of visible light, ultraviolet radiation, x-rays, and gamma rays exert an extremely harmful effect on the human body; as the above-mentioned x-rays or gamma rays are generally not contained in natural light such as sunlight, they will almost never cause harmful effects on the human body unless they are in the immediate vicinity of the eye; although virtually all 100-280 nm UV-C and 280-320 nm UV-B is absorbed by the ozone layer of the atmosphere, the unabsorbable UV-B and the 320-400 nm UV-A cannot be absorbed by the ozone layer and reach the earth's surface, and recently, because of damage to the ozone layer caused by atmospheric pollution, large amounts of ultraviolet radiation have been reaching the earth's surface, having an increasingly harmful effect on the human body; as the above-mentioned ultraviolet radiation having wavelengths of less than 380 nm and 380-400 nm and blue light having a wavelength of 380-500 nm, which overlaps with the above-mentioned ultraviolet radiation and is contained in visible light, are contained in sunlight, it is beneficial to wear glasses that block ultraviolet radiation and blue light in order to protect the human body, and particularly the eyes, and a wide variety of sunglasses that block this ultraviolet radiation and lenses specifically used for blocking ultraviolet radiation have therefore been developed; in particular, although blue light is recognized to be less dangerous than ultraviolet radiation, such blue or short-wavelength light, as it is also called, causes eye fatigue because the short wavelengths form poorly recognized images at the front of the retina, causing the color to be dispersed, which causes the problem of eye fatigue; the shorter the wavelength, the higher the energy, with the result that the visual cells in the eye are more strongly irritated, and in addition to photophobia, eye fatigue becomes more severe; in order to increase the resolution of the displays of devices such as TVs, computer monitors, smartphones, tablet PCs, and handheld game consoles, which have become widespread in recent years, devices such as CCFLs (cold cathode fluorescent lamps) and LEDs (light-emitting diodes), which emit bright colors, have come into use as light sources, and as the brightness of these CCFLs or LEDs entails a corresponding increase in the content of blue light, modern users have been exposed to an increased risk of decreased visual acuity compared to the past.

Therefore, as mentioned above, technologies are being developed in order to protect the eyes by reflecting and absorbing ultraviolet radiation and blue light in the visible light spectrum that are harmful to the body and the eyes; with regard to the technology of the prior art for lenses or glasses in order to block and absorb ultraviolet radiation and blue light, in the prior art document mentioned below, Korean Patent Application No. 7001894 of 1988 (disclosed on 11-5-1988), in production of a lens, a cut-on filter is attached to an integrated polarized film or this film is immersed in a chromatic dye at high temperature in order to absorb ultraviolet radiation and blue light. In Korean Patent Application No. 230630 (disclosed on 7-19-2001), a plastic resin film or polarizing film containing silver and a halogen that changes color tone and color intensity depending on the amount of ultraviolet radiation incident on the lens surface of the glasses is formed either individually or in a composition in order to absorb or block ultraviolet radiation and short-wavelength visible light. However, in these technologies of the prior art, as color tone is imparted to the lens itself for absorbing ultraviolet radiation and short-wavelength blue light in the visible spectrum by means of the adhesion of the polarizing film to the lens and the coloration caused by the dye, in addition to ultraviolet and blue light, visible light that is not harmful to the human body is also absorbed, and the original color tone is not visible, resulting in significant changes in color tone and intensity; in particular, in addition to the blue light in the visible light spectrum, transmittance of the green and red components of long-wavelength light having a wavelength of 500-780 nm, which are not harmful to the body, is also reduced, and when such glasses or lenses are produced and used, if they are worn for long periods, or in the case of frequent detachment, this can lead to the problem of sharply decreased visual acuity, and the polarized film applied to the above-mentioned lens can frequently become detached or scratched, so many precautions must be taken into consideration concerning the dye used for coloration of the lens, and dye coloration to produce lenses of standardized color tone concentration is difficult, resulting in a variety of problems with production.

Moreover, in order to overcome the problems of conventional lenses for blocking ultraviolet radiation and blue light, Korean Patent Application No. 85415 of 2013 (disclosed on 7-29-2013) discloses a method in which a high-refractive-index material and a low-refractive-index material are laminated in multiple layers onto the surface of a plastic material to produce a multilayer film composed of a functional thin film laminated between the plastic material and the multilayer film, but because lenses having such a composition are difficult to produce and the process is time-consuming, this results in problems such as high production costs.

As described above, functional eyeglass lenses for blocking both ultraviolet radiation and blue light have been continuously developed in recent years, but while the majority of these lenses effectively block short-wavelength ultraviolet radiation of 380 nm or below, their absorption performance with respect to long-wavelength ultraviolet radiation of 380-400 nm is much poorer, and they show high permeability to ultraviolet radiation of 380-400 nm, thus giving rise to the problem of potential eye damage, and in the production of lenses intended to block both this ultraviolet radiation and blue light, problems arise such as yellow discoloration of the lens itself, with the result that natural light appears distorted.

### [Prior art documents]

(Patent Document 1) KR 10-1988-7001894 A, 11-5-1988.
(Patent Document 2) KR 20-0230630 Y1, 7-19-2001.
(Patent Document 3) KR 10-2013-0085415 A, 7-29-2013.

### Detailed description of the invention

### Technical object

The present invention proposes a novel technology in order to solve the various problems of the above-mentioned technology of the prior art in which novel technology, in the production of the plastic lens of the invention, a polymerization initiator which reacts with a monomer that is a raw material of a plastic lens and which converts the monomer into a polymer and an ultraviolet absorber that absorbs ultraviolet radiation from physical light, thus blocking it, are mixed in order to make up the lens, wherein various ultraviolet absorbers are used in said ultraviolet absorber, providing it with an outstandingly high blocking capacity with respect to short-wavelength ultraviolet radiation of 380 nm or below and long-wavelength ultraviolet radiation of 380-400 nm, and by means of the above-mentioned ultraviolet absorbers, this absorption and blocking capacity extends to blue light with a wavelength of 380-500 nm; moreover, by means of the above-mentioned ultraviolet absorbers, yellowing of the lens after molding is prevented, thus imparting to the lens a transparent appearance (transparent material is also included in the mix) and providing a functional eyeglass lens for blocking ultraviolet and blue light that blocks both ultraviolet radiation and blue light while preventing distortion of natural light other than blue light, thus fully achieving the object of the invention.

### Means for achieving the object

As a means for achieving the aforementioned object of the invention, the present invention provides a functional eyeglass lens for blocking ultraviolet and blue light, with the above-mentioned functional eyeglass lens of the present invention comprising a mixed composition of a polymerization initiator which reacts with a monomer that is a raw material of a plastic lens whose refractive index varies depending on physical properties, and which converts the monomer into a polymer, an ultraviolet absorber for absorbing ultraviolet radiation from a plastic lens, which absorber is mixed with the monomer to then be converted into a polymer, and a transparent material for making the plastic lens, which material has been mixed with the monomer to be converted into a polymer, and is transparent in that it minimizes a phenomenon in which the plastic lens appears yellow, wherein the ultraviolet absorber contains a mixture of any one or more of a benzotriazole-based UV-A ultraviolet absorber having a molecular weight of 250-330 g/mol, a benzotriazole-based UV-B ultraviolet absorber having a molecular weight of 300-320 g/mol, and a benzotriazole-based UV-C ultraviolet absorber having a molecular weight of 430-450 g/mol.

Moreover, the above-mentioned transparent material contained in the plastic lens is a mixture of a blue dye showing a blue color and a red dye showing a red color, which mixture is mixed with the monomer at a predetermined ratio, wherein the blue dye is composed of C₂₁H₁₅NO₃ and the red dye is composed of C₂₀H₁₈N₂O₄.

In the production method of this type of functional eyeglass lens for blocking ultraviolet and blue light, after the forming mold of the eyeglass lens is provided, one or more of the ultraviolet absorbers UV-A, UV-B, UV-C and a mold release agent are added to monomer A and stirred for 1 hour at room temperature, a polymerization initiator is then added to monomer A and stirring is carried out for 10-20 minutes while maintaining the temperature at 10-20°C, monomer B and monomer C are added to the stirred mixture of the above-mentioned monomer A and the ultraviolet absorber and the stirred mixture of monomer A and the polymerization initiator respectively and stirring is carried out for 10-20 minutes while maintaining the temperature at 10-20°C, and the mixture is then vacuum-stirred for 60 minutes at 0.13-0.4 kPa to carry out defoaming and produce the resin, or the ultraviolet absorbers UV-A and UV-C are added to monomer A and the mixture is stirred for 30 minutes at 20°C, after which monomer B is added, and stirring is carried out for 10 minutes at 20°C , a 2nd polymerization initiator is added to monomer B and stirring is carried out for 10 minutes at 20°C, and after stirring of the above-mentioned monomer A and the ultraviolet absorber, a stirred mixture of the above-mentioned monomer B and the 2^{nd} polymerization initiator is added to the further stirred mixture of the 1^{st} polymerization initiator and monomer B, the resulting mixture is then stirred for 30 minutes at 20°C, and vacuum-stirring is then carried out for 10 minutes at 1.3 kPa while maintaining the temperature at 20°C to carry out defoaming and produce the resin, after which the vacuum is released and the resin is injected into the forming mold while adding nitrogen using a 1.0-1.2 µm filter.

### Effect of the invention

As a concrete means of achieving the above-mentioned object, in the functional eyeglass lens for blocking ultraviolet and blue light of the present invention, when an ultraviolet absorber composed of one or more of the UV-A, UV-B, and UV-C ultraviolet absorbers having different molecular weights is added to the monomer and the polymerization initiator converts the monomer into a polymer to produce the eyeglass lens, this results in an outstanding blocking capacity with respect not only to short-wavelength ultraviolet radiation of 380 nm, but also to long-wavelength ultraviolet radiation of 380-400 nm, thus having the effect of providing a significant improvement compared to the ultraviolet radiation blocking capacity of the eyeglass lenses according to the prior art, and moreover, as this type of lens combines a variety of ultraviolet absorbers, it has a high blocking capacity extending to the blocking and absorption of blue light with a wavelength of 380-500 nm, with this blocking capacity being advantageously higher than that of conventional lenses for blocking ultraviolet and blue light, thus making it possible to significantly reduce the photophobia and eye fatigue caused by ultraviolet radiation and blue light, thus also having the effect of allowing advance prevention of the reduced visual acuity and eye disease caused by this photophobia and eye fatigue and maximizing health-promoting effects.

In addition, in the development and production of eyeglass lenses, the present invention involves the mixing of a transparent material composed of a blue dye showing a blue color and a red dye showing a red color into a monomer at a predetermined ratio and the addition to the above-mentioned monomer of various types of ultraviolet absorbers, thus making it possible to prevent yellowing of the eyeglass lens after molding, and for this reason, the eyeglass lens can be thinner and appear more transparent, thus making the invention particularly effective in blocking ultraviolet radiation and blue light without making natural light appear distorted.

### Simplified explanation of the figures

Fig. 1 shows a comparative table contrasting the ultraviolet-wavelength light and blue light blocking ratios of a dedicated lens for blocking ultraviolet light and blue light according to the prior art and the functional eyeglass lens of the present invention.
Fig. 2 shows a comparative graph contrasting the partial wavelength blocking ratios of a dedicated lens for blocking ultraviolet light and blue light according to the prior art and the functional eyeglass lens of the present invention.

### Description of the preferred embodiments

The present invention relates to a functional eyeglass lens for blocking ultraviolet and blue light that can block light in the ultraviolet region and blue light in the short-wavelength region of the visible spectrum, which are extremely harmful to the human body and eyes, and can prevent photophobia, fatigue, and eye disease caused by ultraviolet radiation and blue light; the invention will be described in further detail below.

The above-mentioned functional eyeglass lens according to the present invention having the function of blocking ultraviolet and blue light is composed of a plastic lens, with said eyeglass lens of the present invention being composed of a monomer that is a raw material for the plastic lens and a polymerization initiator that converts the monomer to a polymer, wherein the eyeglass lens of the present invention comprising said monomer and polymerization initiator is formed from a mixed composition of an ultraviolet absorber that absorbs ultraviolet radiation and blue light and a transparent material that makes the eyeglass lens appear clear and transparent.

Explaining this in further detail, the above-mentioned monomer is a raw material for a plastic lens whose refractive index varies depending on physical properties, and in the present invention, said monomer can be a urethane-based resin comprising as its main components polyisocyanate-based compounds, acryl-based compounds, styrene-based compounds, acrylate-based compounds, allyl carbonate-based compounds, or episulfide-based compounds.

In the present invention, an ultraviolet absorber is added to the monomer that is the raw material of said plastic lens, and the above-mentioned ultraviolet absorber is composed of a mixture of one or more absorbers of the A type UV-A, the B type UV-B, and the C type UV-C having different molecular weights.

The above-mentioned UV-A is a benzotriazole-based ultraviolet absorber having a molecular weight of 250-330 g/mol, with examples hereof including 2-(2-hydroxy-5-tert-octylphenyl)-2H-benzotriazole, 2-(5-tert-butyl-2-hydroxyphenyl)-2H-benzotriazole, and 2-(5-tert-octyl-2-hydroxyphenyl)-2H-benzotriazole.

The above-mentioned UV-B is a benzotriazole-based ultraviolet absorber having a molecular weight of 300-320 g/mol, with examples hereof including 2-(3-tert-butyl-2-hydroxy-5-methylphenyl)-5-chloro-2H-benzotriazole, 2-(5-chloro-2H-benzotriazol-2-yl)-6-(1,1-dimethylethyl)-4-methyl-phenol, and 2-tert-butyl-6-(5-chloro-2H-benzotriazol-2-yl)-4-methylphenone.

The above-mentioned UV-C is a benzotriazole-based ultraviolet absorber having a molecular weight of 430-450 g/mol, with examples hereof including 2-(2H-benzotriazol-2-yl)-6(1-methyl-1-phenylethyl)-4-(1,1,3,3-tetramethylbutyl)phenol.

The plastic eyeglass lens is composed of a mixture of the above ultraviolet absorber comprising multiple types of absorber and a polymerization initiator with a monomer, which is then converted into a polymer, and it has the function of absorbing and blocking ultraviolet radiation and blue light in order to protect the eye.

Moreover, in the present invention composed of a plastic eyeglass lens, produced by mixing with the above-mentioned monomer and subsequent polymerization thereof, that absorbs ultraviolet and blue light, by means of the above-mentioned various types of ultraviolet absorbers added, the phenomenon in which the lens appears yellow is minimized by mixing in a transparent material that appears relatively clear and transparent, thus allowing natural light to permeate, and the natural light does not appear distorted, thus resulting in a clear appearance.

This transparent material is a mixture of a blue dye showing a blue color in the plastic lens and a red dye showing a red color in the plastic lens with a monomer at a predetermined ratio, with the above-mentioned blue dye being composed of the substance having the IUPAC name 1-hydroxy-4-(4-methylanilino)anthracene-9,10-dione and the molecular formula C₂₁H₁₅NO₃ and the red dye being composed of the substance having the IUPAC name of 3-(cyclopropanecarbonyl amino)-N-(4-methoxyphenyl)-1-benzofuran-2-carboxamide and the molecular formula C₂₀H₁₈N₂O₄.

Here, the above-mentioned blue dye and red dye are mixed in a weight ratio of 10:1 to 15:1, with the blue dye being mixed in the amount of 1.5-3 parts by weight and the red dye being mixed in the amount of 0.15-0.3 parts by weight with 100 parts by weight of the monomer.

In addition, in the present invention, the above-mentioned monomer is molded into a hardened plastic lens in a forming mold composed of glass, and when the monomer is polymerized in the glass forming mold and molded into a plastic lens, a mold release agent can be mixed in so that the lens can easily be removed from the forming mold, with alkyl phosphate ester being used as the above-mentioned mold release agent, and said mold release agent is mixed in the amount of 0.06-0.09 parts by weight with 100 parts by weight of the monomer.

In this manner, the present invention is a mixed composition comprising a polymerization initiator, an ultraviolet absorber, and a transparent material mixed with a monomer, and with respect to the classification of ordinary eyeglass lenses according to their refractive index as 1.56, 1.60, 1.67, 1.74 lenses etc., the present invention can be used in 1.60, 1.67, and 1.74 lenses, which are most widely used for the purpose of blocking ultraviolet and blue light; the following is an explanation of this in further detail by means of individual working examples.

### [Working example 1]

First, using the present invention in a 1.60 lens, 50.6 wt% of monomer A, 2,5 (or 2,6)-diisocyanate methylbicyclo(2,2,1)heptane, 23.9 wt% of monomer B, pentaerythritol tetrakis(3-mercaptopropionate), and 25.5 wt% of monomer C, 2,3-bis((2-mercaptoethyl)thio)-1-propanethiol, are mixed, 0.0275 parts by weight or 0.04 parts by weight of a polymerization initiator composed of dibutyltin dichloride are added to 100 parts by weight of the monomer, 0.08 parts by weight of a mold release agent composed of alkyl phosphate ester are added, 0.02-3 parts by weight of the UV-A ultraviolet absorber 2-(2-hydroxy-5-tert-octylphenyl)-2H-benzotriazole, 0.02-0.7 parts by weight of the UV-B ultraviolet absorber 2-(3-tert-butyl-2-hydroxy-5-methylphenyl)-5-chloro-2H-benzotriazole, and 0.02-3 parts by weight of the UV-C ultraviolet absorber 2-(2H-benzotriazol-2-yl)-6(1-methyl-1-phenylethyl)-4-(1,1,3,3-tetramethylbutyl)phenol are added, and this is mixed with a transparent material composed of 1.5 parts by weight of a blue dye having the IUPAC name 1-hydroxy-4-(4-methylanilino)anthracene-9,10-dione and the chemical formula C₂₁H₁₅NO₃ and 0.15 parts by weight of a red dye having the IUPAC name 3-(cyclopropanecarbonyl amino)-N-(4-methoxyphenyl)-1-benzofuran-2-carboxamide and the chemical formula C₂₀H₁₈N₂O₄ to make a mixed composition which is then injected into a forming mold.

### [Working example 2]

Using the present invention in a 1.67 lens, 52.1 wt% of monomer A, 2,5(or 2,6)-diisocyanate methylbicyclo(2,2,1)heptane, and 47.9 wt% of monomer B, pentaerythritol tetrakis(3-mercaptopropionate), are mixed, 0.013 parts by weight of a polymerization initiator composed of dibutyltin dichloride are added to 100 parts by weight of the monomer, 0.09 parts by weight of a mold release agent composed of alkyl phosphate ester are added, 0.02-3 parts by weight of the UV-A ultraviolet absorber 2-(2-hydroxy-5-tert-octylphenyl)-2H-benzotriazole and 0.02-0.7 parts by weight of the UV-B ultraviolet absorber 2-(3-tert-butyl-2-hydroxy-5-methylphenyl)-5-chloro-2H-benzotriazole are added, and this is mixed with a transparent material composed of 1.7 parts by weight of a blue dye having the IUPAC name 1-hydroxy-4-(4-methylanilino)anthracene-9,10-dione and the chemical formula C₂₁H₁₅NO₃ and 0.13 parts by weight of a red dye having the IUPAC name 3-(cyclopropanecarbonyl amino)-N-(4-methoxyphenyl)-1-benzofuran-2-carboxamide and the chemical formula C₂₀H₁₈N₂O₄ to make a mixed composition which is then injected into a forming mold.

### [Working example 3]

Using the present invention in a 1.74 lens, 50.6 wt% of monomer A, bis(2,3-epithiopropyl)disulfide, and 23.9 wt% of monomer B, bis(mercaptomethyl)-3,6,9-trithiaundecane-1,11-dithiol, are mixed, 0.00255 parts by weight of a 1^{st} polymerization initiator composed of n-methyldicyclohexylamine and 0.0275 parts by weight of a 2nd polymerization initiator composed of n,n-dimethylcyclohexylamine are added to 100 parts by weight of the monomer, 0.02-3 parts by weight of the UV-A ultraviolet absorber 2-(2-hydroxy-5-tert-octylphenyl)-2H-benzotriazole and 0.02-0.7 parts by weight of the UV-C ultraviolet absorber 2-(2H-benzotriazol-2-yl)-6(1-methyl-1-phenylethyl)-4-(1,1,3,3-tetramethylbutyl)phenol are added, and this is mixed with a transparent material composed of 1.5 parts by weight of a blue dye having the IUPAC name 1-hydroxy-4-(4-methylanilino)anthracene-9,10-dione and the chemical formula C₂₁H₁₅NO₃ and 0.15 parts by weight of a red dye having the IUPAC name 3-(cyclopropanecarbonyl amino)-N-(4-methoxyphenyl)-1-benzofuran-2-carboxamide and the chemical formula C₂₀H₁₈N₂O₄ to make a mixed composition which is then injected into a forming mold.

As mentioned above, the production method of the functional eyeglass lens for blocking ultraviolet and blue light comprising a mixed composition of the present invention includes a casting process in which a forming mold is provided and resin is injected into its interior and polymerized in order to mold the plastic lens, and a hard coating process in which a hard coating is applied to the surface of the lens produced in said casting process and thermal treatment is carried out, but it may also include a molding process in which the hard coated lens produced in said hard coating process is applied by vacuum deposition, and in this case, in the above-mentioned casting process of the present invention, a forming mold is provided and a mixed-composition resin as described above is injected into it, after which polymerization is carried out in order to mold the plastic lens.

If the method of producing the functional eyeglass lens for blocking ultraviolet and blue light of the present invention is examined in further detail, in the case of production of a 1.60 lens or a 1.67 lens, after the forming mold for the eyeglass lens is provided, any one or more of the ultraviolet absorbers UV-A, UV-B, and UV-C and a mold release agent for facilitating separation of the glass forming mold and the plastic lens are added to monomer A and the mixture is stirred for 1 hour at room temperature, a polymerization initiator is then added to monomer A and the mixture is stirred for 10-20 minutes while being maintained at 10-20□, monomer B and monomer C are added to the above-mentioned stirred mixture of monomer A and the ultraviolet absorber and the stirred mixture of monomer A and the polymerization initiator respectively and the mixtures are stirred for 10-20 minutes while being maintained at 10-20°C, the mixtures are then vacuum-stirred for 60 minutes at 0.13-0.4 kPa to carry out defoaming and produce a resin, after which the vacuum is released and the resin is injected into the forming mold while adding nitrogen using a 1.0-1.2 µm filter.

In this case, with regard to the mixing amounts used in the molding of the above-mentioned 1.60 and 1.67 lenses, 0.06 parts by weight of the mold release agent are added while adding any one or more of the ultraviolet absorbers in the amount(s) of 0.02-3 parts by weight of UV-A, 0.02-0.7 parts by weight of UV-B, or 0.02-3 parts by weight of UV-C to 50.6-52.1 parts by weight of monomer A, 0.005-0.04 parts by weight of the polymerization initiator are added to 50 parts by weight of monomer A containing the above-mentioned ultraviolet absorber and the mold release agent, and 23.9-47.9 parts by weight of monomer B and 25.5-49.4 parts by weight of monomer C are then added to the stirred mixture of the above-mentioned monomer A with the ultraviolet absorber, the mold release agent, and the polymerization initiator.

Moreover, with regard to the 1.74 lens production method, after the eyeglass lens forming mold is provided, the ultraviolet absorbers UV-A and UV-C are added to monomer A and stirring is carried out for 30 minutes at 20°C, monomer B is then added and stirring is carried out for 10 minutes at 20°C, a 2nd polymerization initiator is added to monomer B and stirring is carried out for 10 minutes at 20°C, after stirring of the above-mentioned monomer A and the ultraviolet absorber, monomer B is further stirred, the 2^{nd} polymerization initiator is stirred into the 1st polymerization initiator and the above-mentioned monomer B and stirring is carried out for 30 minutes at 20°C, and vacuum-defoaming is carried out for 10 minutes at 1.3 kPa while maintaining the temperature at 20□ to produce a resin, after which the vacuum is released and the resin is injected into the forming mold while adding nitrogen using a 1.0-1.2 µm filter.

In this case, moreover, with regard to the mixing ratios in the molding of the above-mentioned 1.74 lens, an ultraviolet absorber composed of 0.02-3 parts by weight of UV-A and 0.02-0.7 parts by weight of UV-C is added to 50.6 parts by weight of monomer A and the mixture is stirred, 23.9 parts by weight of monomer B are added, and the ultraviolet absorber is added to the above-mentioned monomer A and stirring is carried out, after which 0.0275 parts by weight of a 2^{nd} polymerization initiator are added to 23.9 parts by weight of monomer B, the above-mentioned monomer A and the ultraviolet absorber are stirred and monomer B is further stirred into the mixture, and a mixture of 0.00255 parts by weight of the 1st polymerization initiator and the above-mentioned monomer B with the 2nd polymerization initiator stirred into it is finally added.

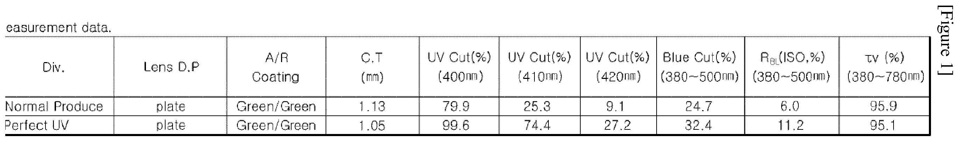

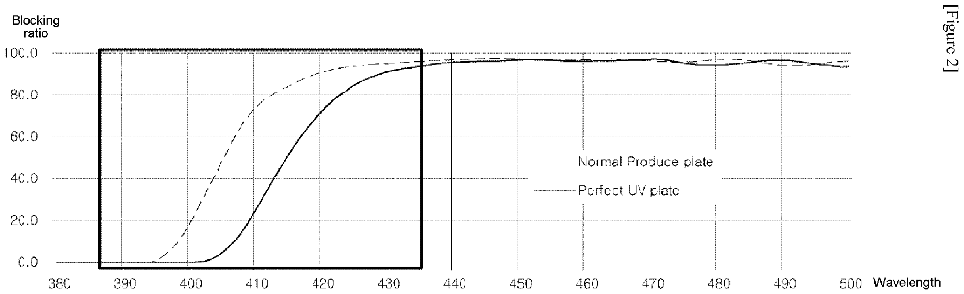

As mentioned above, in the casting process in which the functional eyeglass lens for blocking ultraviolet and blue light is produced by injecting a mixed composition into the forming mold, an ultraviolet absorber composed of one or more of the ultraviolet absorbers UV-A, UV-B, and UV-C having different molecular weights is added to the monomer, and by means of the polymerization initiator, the monomer is converted into a polymer in order to mold the plastic eyeglass lens, a transparent material composed of a blue dye showing a blue color and a red dye showing a red color is mixed with the monomer at a predetermined ratio, and the present invention molded and produced in this manner is referred to as a so-called "perfect UV", while conventional dedicated lenses for blocking ultraviolet radiation and blue light are referred to as "normal produce," as shown in Figs 1 and 2, which are a table and a graph respectively comparing measurement data for ultraviolet and blue light blocking ratios according to wavelength. Compared to a conventional blocking lens (normal produce), the functional eyeglass lens of the present invention (perfect UV) shows an extremely high blocking ratio not only for short-wavelength ultraviolet radiation at 380 nm, but also for long-wavelength ultraviolet radiation at 380-400 nm, and together with its high degree of blocking action with respect to blue light having a wavelength of 380-500 nm, as the invention provides both absorption and blocking functions, showing an advantageously high blocking ratio compared to conventional dedicated lenses for blocking ultraviolet and blue light, not only does it have the effect of preventing photophobia, eye fatigue, reduced visual acuity, and eye disease resulting from ultraviolet radiation and blue light, but also, because of the various types of ultraviolet absorbers added to the monomer, the transparent material minimizes yellowing of the eyeglass lens after molding, making it appear clearer and more transparent and preventing distortion of natural light.

In the more detailed explanation of the present invention given above, the present invention has been illustrated by means of examples of preferred embodiments. However, as modified implementations that do not depart from the scope of the present invention are also possible, the scope of protection of the present invention is not limited to the above-mentioned embodiments, but is to be understood as extending to cover not only the technology of the following claims but also any technological means equivalent thereto.

### Possibilities for industrial use

The present invention can be industrially used as a functional eyeglass lens for blocking ultraviolet radiation and blue light that are harmful to the human body and the eye.

## Claims

1. A functional eyeglass lens for blocking ultraviolet and blue light, **characterized in that** it comprises a mixed composition of:
a monomer that is a raw material of a plastic lens whose refractive index varies depending on physical properties,
a polymerization initiator that reacts with the monomer, converting it into a polymer,
an ultraviolet absorber for absorbing ultraviolet radiation from a plastic lens, which absorber is mixed with the monomer to then be converted into a polymer and is composed of a mixture of a benzotriazole-based UV-A ultraviolet absorber having a molecular weight of 250-330 g/mol, a benzotriazole-based UV-B ultraviolet absorber having a molecular weight of 300-320 g/mol, and a benzotriazole-based UV-C ultraviolet absorber having a molecular weight of 430-450 g/mol,
and a transparent material for making the plastic lens, which material is mixed with the monomer to then be converted into a polymer, and is transparent **in that** it minimizes a phenomenon in which the plastic lens appears yellow, said transparent material being a mixture of a blue dye composed of C₂₁H₁₅NO₃ in order to show a blue color in the plastic lens and a red dye composed of C₂₀H₁₈N₂O₄ in order to show a red color in the plastic lens, at a predetermined ratio.

2. The functional eyeglass lens for blocking ultraviolet and blue light as claimed in claim 1, **characterized in that** the blue dye and the red dye are mixed at a weight ratio of 10:1 to 15:1.

3. The functional eyeglass lens for blocking ultraviolet and blue light as claimed in claim 1, **characterized in that** it comprises a mixed composition of
0.0275 parts by weight or 0.04 parts by weight of a polymerization initiator composed of dibutyltin dichloride,
0.08 parts by weight of a mold release agent composed of alkyl phosphate ester,
0.02-3 parts by weight of the UV-A ultraviolet absorber 2-(2-hydroxy-5-tert-octylphenyl)-2H-benzotriazole,
0.02-0.7 parts by weight of the UV-B ultraviolet absorber 2-(3-tert-butyl-2-hydroxy-5-methylphenyl)-5-chloro-2H-benzotriazole,
0.02-3 parts by weight of the UV-C ultraviolet absorber 2-(2H-benzotriazol-2-yl)-6 (1-methyl-1-phenylethyl)-4-(1,1,3,3-tetramethylbutyl)phenol, and
a transparent material composed of 1.5-3 parts by weight of the blue dye 1-hydroxy-4-(4-methylanilino)anthracene-9,10-dione (= C₂₁H₁₅NO₃) and 0.15-0.3 parts by weight of the red dye 3-(cyclopropanecarbonyl amino)-N-(-benzofuran-2-carboxamide (= C₂₀H₁₈N₂O₄),
added to a composition of 50.6 wt% of monomer A, 2,5(or 2,6)-diisocyanate methylbicyclo(2,2,1)heptane, 23.9 wt% of monomer B, pentaerythritol tetrakis(3-mercaptopropionate), and 25.5 wt% of monomer C, 2,3-bis((2-mercaptoethyl)thio)-1-propanethiol, mixed with 100 parts by weight of a monomer.

4. A method for producing a functional eyeglass lens for blocking ultraviolet and blue light, **characterized in that** in said method for producing a functional eyeglass lens for blocking ultraviolet and blue light,
after an eyeglass lens forming mold is provided,
an ultraviolet absorber composed of a mixture of 0.02-3 parts by weight of UV-A, 0.02-0.7 parts by weight of UV-B, and 0.02-3 parts by weight of UV-C is mixed with 50.6-52.1 parts by weight of monomer A and 0.06 parts by weight of a mold release agent, and stirring is carried out for 1 hour at room temperature,
0.005-0.04 parts by weight of a polymerization initiator are added to 50 parts by weight of monomer A, and stirring is carried out for 10-20 minutes while maintaining the temperature at 10-20°C,
23.9-47.9 parts by weight of monomer B and 25.5-49.4 parts by weight of monomer C are added to the stirred mixture of the above-mentioned monomer A and the ultraviolet absorber and the stirred mixture of monomer A and the polymerization initiator respectively, and stirring is carried out for 10-20 minutes while maintaining the temperature at 10-20°C,
a transparent material composed of 1.5-3 parts by weight of a blue dye showing a blue color and 0.15-0.3 parts of a red dye showing a red color is mixed with 100 parts by weight of monomer A, monomer B, and monomer C combined, and
vacuum-stirring is then carried out for 60 minutes at 0.13-0.4 kPa to carry out defoaming and produce the resin,
after which the vacuum is released and the resin is injected into the forming mold while adding nitrogen using a 1.0-1.2 µm filter.
